# EUROPEAN PATENT SPECIFICATION

(11) **EP 4 257 370 B1**
(45) Date of publication and mention of the grant of the patent: **25.03.2026**
(21) Application number: 23167011.8
(22) Date of filing: 06.04.2023
(51) Int. Cl.: B60C 1/00, C08L 9/00

(54) **TIRE RUBBER COMPOSITION FOR HEAVY LOAD VEHICLE**
REIFENGUMMIZUSAMMENSETZUNG FÜR SCHWERLASTFAHRZEUG
COMPOSITION DE CAOUTCHOUC POUR PNEUMATIQUE POUR VÉHICULE POIDS LOURD

(30) Priority: 08.04.2022 US 202263362666 P; 13.02.2023 US 202318168080
(43) Date of publication of application: 11.10.2023
(73) Proprietor: The Goodyear Tire & Rubber Company, Akron, OH 44316 (US)
(72) Inventor: LOPEZ GAXIOLA, Daniel, Akron (US); DILLON, Sean Michael, Wadsworth (US)
(74) Representative: Kutsch, Bernd

(56) References cited:
- EP-A1- 0 747 428
- DE-A1- 19 706 025
- US-A1- 2015 031 790

## Description

### Field of the Invention

The present disclosure relates to a rubber formulation for a tire or tire components such as a heavy-load tire component and is described with particular reference thereto. However, it is to be appreciated that the present exemplary embodiments are amenable for incorporation in other rubber products and for like applications.

### Background of the Invention

Tire abrasion is the unavoidable loss of rubber material during sliding contact with the road. Therefore, a repeated stop-and-go operation is expected to abrade the tires of certain heavy load (e.g., public transport and waste haul) vehicles. This can also lead to tread damage in the form of separations that prematurely destroy the tires.

For heavy load vehicles, the selection of materials for incorporation into the tire is material- and combination-specific. Various rubber compositions have been proposed in which a high natural rubber content is used for heavy load tires. Other compositions employ high butadiene content to improve abrasion resistance. Efforts to move away from these rubber polymers have led to processing challenges, such as hot tearing in the uncured state.

Here, a rubber composition is desired for heavy load tires. Such composition desirably displays improved green tack, strong adhesion, and high abrasion resistance in the cured state, but also displays no difficulty with processing, i.e., improves processability in the uncured state. A new polymer blend is introduced from which a balance between performance and processability is observed.

### Summary of the Invention

The invention relates to a rubber composition in accordance with claim 1 or 12 respectively, and to a tire in accordance with claim 14.

Dependent claims refer to preferred embodiments of the invention.

A preferred embodiment is directed to a rubber composition for a heavy load tire. The heavy load tire rubber composition comprises, based on 100 parts by weight of elastomer (phr), at least three diene elastomers each being a different rubber material. The elastomers include polybutadienes and a synthetic polyisoprene. The polybutadienes comprise a majority portion of a first polybutadiene synthesized with a lanthanide series catalyst, and a minority portion of second polybutadiene synthesized with a Nickel-based catalyst. The first and second polybutadienes are characterized by Mooney viscosities that are within ± 5 MU of each other, while the synthetic polyisoprene is characterized by a Mooney viscosity higher than the polybutadienes. The elastomers are each characterized by a high cis content of greater than 80 percent.

Another preferred embodiment is directed to a rubber composition for a heavy load tire. The heavy load tire rubber composition comprises, based on 100 parts by weight of elastomer (phr), 10 phr to 30 phr of a synthetic polyisoprene having a high cis content; and 70 phr to 90 phr two low Tg polybutadienes each having a high cis content. The primary polybutadiene is synthesized with a lanthanide series catalyst and the secondary/lesser polybutadiene is synthesized with catalyst of a different series. The heavy load tire rubber composition further comprises greater than 3 phr vegetable triglyceride rubber processing oil.

In the contemplated preferred embodiment, the heavy load tire rubber composition is incorporated into a tread or ground-contacting tire component of a heavy load or heavy-duty vehicle.

### Detailed Description of Preferred Embodiments

As used herein, except where context requires otherwise, the term "comprise" and variations of the term, such as "comprising", "comprises" and "comprised", are not intended to exclude further additives, components, integers, or steps.

As used herein, the terms "rubbery polymer", "polymer", "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art.

The present disclosure is directed to a rubber composition preferably for a heavy load tire. The tire rubber composition comprises, based on 100 parts by weight of elastomer (phr), at least three diene elastomers each being a different rubber material. The elastomers include (a) a first polybutadiene synthesized with a lanthanide series catalyst; (b) a second polybutadiene synthesized with a Nickel-based catalyst; and (c) a synthetic polyisoprene. The first polybutadiene is preferably characterized by a glass transition temperature(Tg) below - 100° C. The second polybutadiene is preferably similarly characterized by a Tg within 5° difference of the first polybutadiene Tg. All three of the elastomers are preferably characterized by a high cis content of greater than 80 percent.

### Rubber Elastomers

An important aspect of the disclosed rubber composition is a tripolymer blend of conjugated diene-based elastomers. Representative conjugated diene-based elastomers, for example, comprise at least one of cis 1,4-polyisoprene (preferably synthetic) and cis 1,4-polybutadiene.

In practice, each elastomer is a different rubber polymer. Various rubber polymers may be used for the rubber composition such as, for example, polymers and copolymers of at least one of isoprene and 1,3-butadiene copolymerized with at least one of isoprene and 1,3-butadiene, and mixtures thereof. In one embodiment, the tripolymer blend is formed from all synthetic polymers.

Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile, which polymerize with butadiene to form NBR, methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether.

Specific examples of synthetic rubbers include neoprene (polychloroprene), polybutadiene (including cis-1,4-polybutadiene), polyisoprene (including cis-1,4polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers.

In practice, the preferred rubber or elastomers are polyisoprene and polybutadiene.

In a preferred embodiment, the heavy load tire rubber composition contains synthetic polyisoprene and excludes natural rubber. The synthetic polyisoprene is desirable because it has a higher tack than natural rubber. It is observed that replacing natural rubber, used in conventional heavy load rubber compounds, with synthetic polyisoprene allows for improved resistance of the compound to hot tearing in its uncured state. This helps reduce the occurrence of tearing of the compound slab during manufacturing, and it also prevents downtime during cooling and laydown operations.

In the contemplated embodiment, the cis-1,4 polyisoprene is characterized by a high cis content of greater than 80% and, more preferably, greater than 90% or greater than 95%, as measured by QA 5114-01 (IR).

In the contemplated preferred embodiment, the rubber composition comprises from 1 to 49 phr and, more preferably, from 5 to 40 phr, and most preferably from 10 to 30 phr of synthetic polyisoprene.

An example polyisoprene that may be used in the disclosed rubber composition is the synthetic polyisoprene available from The Goodyear Tire & Rubber Corporation under the NATSYN trademark with designation 2200.

Generally, the disclosed rubber composition comprises the polyisoprene in a minority amount relative to total content of elastomer. The majority elastomer comprises a different synthetic polymer.

In practice, the rubber composition can comprise at least one and, more preferably, at least two high cis polybutadiene rubber(s) each, preferably, having a cis 1,4 content of at least 80%, and more preferably more than 90%, and most preferably more than 95%, as measured by QA 5114-01 (IR).

This is considered herein to contain branches of pendant polybutadiene groups along its molecular chain. In an embodiment, one or both of the two polybutadienes may be branched.

In practice, it is envisioned that at least one of the cis 1,4-polybutadiene elastomers may be prepared, for example, by polymerization of 1,3-polybutadiene monomer in an organic solvent solution in the presence of a lanthanide-based polymerization catalyst. Suitable catalyst may include lanthanide catalysts based on cerium, praseodymium, neodymium, or gadolinium. In one embodiment, the lanthanide-based polymerization catalyst is neodymium catalyst system.

In practice, it is envisioned that at least one of the cis 1,4-polybutadiene elastomers may be prepared, for example, by polymerization of 1,3-polybutadiene monomer in an organic solvent solution in the presence of a Nickel-based polymerization catalyst. Suitable catalyst may be based on a nickel compound, an organoaluminum compound, and a halogen compound.

In a contemplated embodiment, the rubber composition can comprise two cis 1,4-polybutadienes each prepared by a different catalyst. In one embodiment, the rubber composition can comprise a first cis 1,4-polybutadiene prepared by lanthanide-based catalyst and a second cis 1,4-polybutadiene prepared by a catalyst that is not lanthanide-based. In one embodiment, the rubber composition can comprise a first cis 1,4-polybutadiene prepared by lanthanide-based catalyst and a second cis 1,4-polybutadiene prepared by a Nickel-based catalyst. Such specialized polybutadienes would each have a medium or medium high Mooney viscosity (ML 1+4) at 100°C in their unvulcanized states in a range of from 30 to 75 and, more specifically, from 35 to 45, as measured by ASTM D1646.

In this application, Mooney viscosity means the Mooney viscosity (ML 1+4) at 100°C as measured in accordance with ASTM D1646.

In a preferred embodiment, the polybutadiene rubbers are each characterized by a low glass transition temperature inflection point (Tg) below -80°C and, more preferably, below - 100°C, as measured by ASTM D3418-15.

In this application, the glas transition temperature of polymers is determined as a peak midpoint by a differential scanning calorimeter (DSC) at a temperature rate of increase of 10°C per minute, according to ASTM D3418-15 or equivalent.

Preferably, the Tgs of the first and second polybutadienes are within 5°C difference.

In one example embodiment, the Tgs of the first and second polybutadienes can both be between -80°C and -120°C. In certain embodiments, a polybutadiene blend both being characterized by a low Tg can be used to balance performance and processing.

Example polybutadienes that may be used in the disclosed rubber composition are the synthetic polybutadiene is available from The Goodyear Tire & Rubber Corporation under the BUD4001 and BUD24PRO tradenames or from LG Chem under the SABIC trademark with designation 4010.

In the contemplated embodiment, the rubber composition comprises from 51 to 99 phr and, more preferably, from 60 to 95 phr, and most preferably from 70 to 90 phr of polybutadienes. In one embodiment, the polybutadiene rubbers can be present at substantially equal levels, but the preferred embodiment contemplates a first and at least a second polybutadiene at different levels. In one embodiment, the rubber composition comprises from 35 to 90 phr and, more preferably, from 40 to 80 phr, and most preferably from 50 to 70 phr of a first polybutadiene, which is formed using the lanthanide-based catalyst. The first polybutadiene is present in a majority portion, which means that it is present at a level that is higher than each of the other rubber polymers in the blend. In a preferred embodiment, the first polybutadiene is present at a level that is greater than the combined total of other polymers in the blend. In one embodiment, the rubber composition comprises from 1 to 35 phr and, more preferably, from 10 to 30 phr of a second polybutadiene, which is formed using a catalyst that is different from the first polybutadiene. The second polybutadiene is present in a minority portion, which means that it is present at a level that is lower than first polybutadiene in the blend. In a preferred embodiment, the second polybutadiene is present at a level that is equal to or lower than the other elastomer (e.g., polyisoprene) in the blend.

It is discovered that incorporation of the second polybutadiene in the disclosed composition improves processability in such ways that further improve appearance and porosity as compared to the conventional compounds.

In certain embodiments, the first polybutadiene can be present relative to the second polybutadiene in a 2:1 to a 4:1 ratio; the first polybutadiene can be present relative to the polyisoprene in a 2:1 to a 4:1 ratio; and the second polybutadiene can be present relative to the polyisoprene in a 2:1 to a 1:2 ratio. In practice the first polybutadiene, second polybutadiene, and polyisoprene are present in a 3:1:1 ratio +/- 5 phr.

### Oil

In a preferred embodiment, the heavy load rubber composition includes at least one oil. In one embodiment, the rubber composition may comprise up to 20 phr of rubber processing oil. In another embodiment, the rubber composition oil may comprise no less than 2 phr of rubber processing oil. In practice, the rubber processing oil may be present at from 2 to 10 phr and, more preferably, from 2.5 to 5 phr of rubber processing oil. Processing oil may be included in the rubber composition as extending oil typically used to extend elastomers. Processing oil may also be included in the rubber composition by addition of the oil directly during rubber compounding. The processing oil used in the rubber composition may include both extending oil present in the elastomers and process oil added during compounding. Suitable process oils include various oils as are known in the art, including aromatic, paraffinic, naphthenic, vegetable triglyceride oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

A suitable vegetable triglyceride oil comprises a combination of saturated and unsaturated esters where the unsaturated esters comprise a combination of at least one of oleic acid ester, linoleate acid ester and linoleate acid ester. The saturated esters may comprise, for example, at least one of stearic acid ester and palmitic acid ester.

In a preferred embodiment, the vegetable triglyceride oil is or comprises at least one of soybean oil, sunflower oil, rapeseed oil, and canola oil. In practice, the rubber composition includes at least one of soybean oil and sunflower oil. In a preferred embodiment, the rubber composition excludes a petroleum-derived oil.

### Resin(s)

The rubber composition may optionally include at least 1 phr, and more preferably at least 3 phr, and most preferably at least 4 phr of resin. The disclosed heavy load tire rubber composition contains a higher level of resin compared to the conventional heavy load tire compound.

A suitable measurement of Tg for resins is DSC at a temperature rate of increase of 10°C per minute according to ASTM D6604 or equivalent. Resin softening point is determined by ASTM E28, which might sometimes be referred to as a ring and ball softening point. In one embodiment, the rubber composition may optionally include a resin or combination of resins each having a softening point above 80°C.

The resin may be selected from the group consisting of any hydrocarbon chemistry type resin (AMS, coumarone-indene, C5, C9, C5/C9, DCPD, DCPD/C9, others) & any modification thereof (phenol, C9, hydrogenation, recycled monomers, others) and any renewable biobased chemistry type resin (like any polyterpene, gum rosin, tall oil rosin, etc) & modification (phenol, C9, hydrogenation, DCPD, esters, others) and mixture thereof.

In one embodiment, the resin may be a coumarone-indene resin containing coumarone and indene as the monomer components making up the resin skeleton (main chain). Monomer ingredients other than coumarone and indene which may be incorporated into the skeleton are, for example, methyl coumarone, styrene, alphamethylstyrene, methylindene, vinyltoluene, dicyclopentadiene, cycopentadiene, and diolefins such as isoprene and piperlyene.

Suitable petroleum resins include both aromatic and nonaromatic and aliphatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include any C5 species (olefins and diolefins containing an average of five carbon atoms) such as cyclopentadiene, dicyclopentadiene, diolefins such as isoprene and piperylene, and any C9 species (olefins and diolefins containing an average of 9 carbon atoms) such as vinyltoluene, alphamethylstyrene and indene. Such resins are made by any mixture formed from C5 and C9 species mentioned above.

The styrene/alphamethylstyrene resin is considered herein to be a relatively short chain copolymer of styrene and alphamethylstyrene. The styrene/alphamethylstyrene resin may have, for example, a styrene content in a range of from 10 to 90 percent. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely, its styrene and alphamethylstyrene contents and by its glass transition temperature, molecular weight and molecular weight distribution. Suitable alphamethylstyrene resin is available commercially as SYLVATRAXX 4401 from multiple suppliers.

Terpene-phenol resins may be used. Terpene-phenol resins may be derived by copolymerization of phenolic monomers with terpenes such as limonenes, pinenes and delta-3-carene.

Additional types of resins are those derived from rosin and derivatives. Representative thereof are, for example, gum rosin, wood rosin and tall oil rosin. Gum rosin, wood rosin and tall oil rosin have similar compositions, although the number of components of the rosins may vary. Such resins may be dimerized, polymerized or disproportionated. Such resins may be in the form of esters of rosin acids and polyols such as pentaerythritol or glycol.

In a preferred embodiment, said resin is partially or fully hydrogenated.

In practice, at least two resins - preferably traction and tackifyng - are employed. The combination of an aliphatic hydrocarbon resin with an alpha-methyl (AMS) styrene resin (characterized by both aliphatic and aromatic content) were discovered to improve green tack in the disclosed composition. This improved green tack reduces the risk of tire separations that are caused by low uncured adhesion in conventional heavy-load compounds. Particularly, one embodiment contemplates a majority phr of the resin content being the AMS with a minority phr of the resin content being the aliphatic hydrocarbon.

### Curing Agent

An important aspect of the present disclosure is the cure package. Accelerators are used to control the time and/or temperature required for vulcanization and to improve the properties of the vulcanizate. Typically, the rubber compositions for conventional heavy load tires use primary and secondary accelerators. Combinations of these accelerators might be expected to produce a synergistic effect on the final properties of a conventional compound and are somewhat better than those produced by use of either accelerator alone. Example primary accelerators are amines, disulfides, thioureas, thiazoles, sulfenamides (e.g., N-cyclohexyl-2-benzothiazolesulphenamide (CBS), and N-Tertbutyl-2-Benzothiazolesulfenamide (TBBS)) and xanthates. Specific examples of secondary accelerators are a guanidine (e.g., diphenylguanidine (DPG)), dithiocarbamate or thiuram compound.

It is discovered that the present compound maintains and/or improves curing in the absence of a secondary accelerator or combination of accelerators. Previously, and more particularly, a silica filler necessitates the use of a secondary or combination of accelerator(s), such as a guanidine, to make the compound cure faster. The present disclosed composition provides similar properties (e.g., curing rate) in the absence of the secondary accelerator. In one embodiment, the heavy load rubber composition excludes a secondary accelerator.

Embodiments are contemplated in which a single accelerator system may be used, i.e., primary accelerator. The primary accelerator(s) may be used in total amounts ranging from 0.5 to 6, preferably 1 to 4, phr. Preferably, the primary accelerator is a sulfenamide. One non-limiting example of a sulfenamide is N-Tertbutyl-2-Benzothiazolesulfenamide (TBBS).

In addition, delayed action accelerators may be used which are not affected by normal processing temperatures but produce a satisfactory cure at ordinary vulcanization temperatures. Vulcanization retarders might also be used. An example of a retarder can be N-cyclohexylthiophthalimide (CTP).

### Reinforcement Network

The present compound also comprises a filler system or reinforcement network. The filler system comprises at least carbon black and silica in combination. In one embodiment, the majority filler is carbon black. In one embodiment, the minority filler portion belongs to silica. In the contemplated embodiment, the reinforcement network comprises a balance of carbon black to silica in a 3:1 to 4:1 ratio.

In one example, the carbon black is present in the rubber compound in an amount no less than 20 phr. In another example, the carbon black is present in an amount of no more than 80 phr. In yet another example, the carbon black may be present in an amount of from 30 phr to 60 phr and, more preferably, from 40 phr to 50 phr.

In one example, the silica is present in the rubber compound in an amount no less than 5 phr. In another example, the silica is present in an amount of no more than 30 phr. In yet another example, the silica may be present in an amount of from 10 phr to 20 phr and, more preferably, from 10 phr to 15 phr.

Representative examples of carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

The silica filler may be any suitable silica or a combination of any such silica. Commonly used siliceous pigments that are used in rubber compounding applications include pyrogenic and precipitated siliceous pigments (silica), as well as precipitated high surface area ("HSA") silica and highly dispersive silica ("HDS").

The conventional siliceous pigments preferably employed in this invention are precipitated silicas such as, for example, those obtained by the acidification of a soluble silicate, e.g., sodium silicate.

The precipitated silicas can be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, page 304 (1930). The conventional silica may also be typically characterized by having a dibutylphthalate (DBP) absorption value in a range of 100 to 400, and more usually 150 to 300. The conventional silica might be expected to have an average ultimate particle size, for example, in the range of 0.01 to 0.05 micron as determined by the electron microscope, although the silica particles may be even smaller, or possibly larger, in size.

When precipitated silica is a pre-hydrophobated precipitated silica, additional precipitated silica (non-pre-hydrophobated silica) and/or a coupling agent may optionally be added to the rubber composition.

Other fillers that may be used in the rubber composition include particulate fillers such as ultra-high molecular weight polyethylene (UHMWPE), particulate polymer gels, and plasticized starch composite filler.

In one embodiment, the rubber composition may also include a (e.g., silane) coupling, such as bis(ω-trialkoxyalkylsilyl) polysulfide, ω-mercaptoalkyl-trialkoxysilane, or combination thereof. In one example, the bis-(ω-trialkoxysilylalkyl) polysulfide has an average of from 2 to 4 connecting sulfur atoms in its polysulfidic bridge. In another example, the bis-(ω-trialkoxysilylalkyl) polysulfide has an average of from 2 to 2.6 connecting sulfur atoms in its polysuflidic bridge. In yet another example, the bis-(ω-trialkoxysilylalkyl)polysulfide has an average of from 3.3 to 3.8 connecting sulfur atoms in its polysulfidic bridge. The alkyl group of the silylalkyl moiety of the bis-(ω-trialkoxysilylalkyl)polysulfide may be a saturated C₂-C₆ alkyl group, e.g., a propyl group. In addition, at least one of the alkyl groups of the trialkoxy moiety of the bis-(ω-trialkoxysilylalkyl)polysulfide can be an ethyl group and the remaining alkyl groups of the trialkoxy moiety can be independently saturated C₂-C₁₈ alkyls. In another example, at least two of the alkyl groups of the trialkoxy moiety of the bis-(ω-trialkoxysilylalkyl) polysulfide are ethyl groups and the remaining alkyl group of the trialkoxy moiety is independently a saturated C₃-C₁₈ alkyl. In one example, the bis-(ω-trialkoxysilylalkyl) polysulfide coupling agent is bis-3-(triethoxysilylpropyl) tetrasulfide ("TESPD"). In another example, the bis-(ω-trialkoxysilylalkyl) Polysulfide coupling agent is bis-3-(triethoxysilylpropyl) tetrasulfide ("TESPT"). The ωmercaptoalkyltrialkoxysilane may have its mercapto moiety blocked from pre-reacting with hydroxyl groups (e.g., silanol groups) contained on the precipitated silica aggregates prior to unblocking the blocked mercapto moiety at an elevated temperature. In one example, the blocked ω-mercaptoalkyl-trialkoxysilane is NXT or NXT-LoV available from GE Silicones of Tarrytown, N.Y.

The silane coupling agent is preferably present in the rubber compound in an amount no less than 10% by weight of silica. In another example, the silane coupling agent is present in an amount no more than 20% by weight of silica.

The silane coupling agent may be present in an amount between from 0 to 10 phr and, more specifically, from 0.5 to 5 phr. The silane coupling agent may be present in the rubber compound in an amount no greater than 5 phr and, more specifically, 4 phr in some embodiments. In another example, the silane coupling agent may be present in an amount no less than 2 phr and, in certain embodiments, 3 phr.

### Sulfur Curative

It is preferred to have the rubber composition for use in the tire component additionally contain a conventional sulfur containing organosilicon compound. Examples of suitable sulfur containing organosilicon compounds are of the formula:

Z - Ak - Sₙ - Alk - Z I

in which Z is selected from the group consisting of 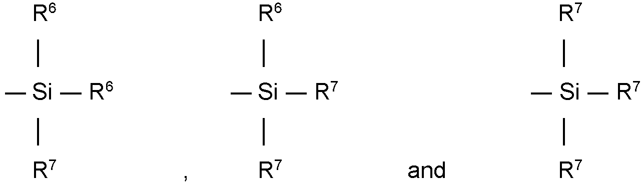 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula I, preferably Z is 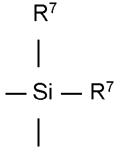 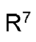 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred. In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In another embodiment, suitable sulfur containing organosilicon compounds include the reaction product of hydrocarbon based diol (e.g., 2-methyl-1,3-propanediol) with S-[3-(triethoxysilyl)propyl] thiooctanoate. In one embodiment, the sulfur containing organosilicon compound is Si-363 from Degussa.

The amount of the sulfur containing organosilicon compound of formula I in a rubber composition will vary depending on the level of other additives that are used. The amount of the compound of formula I will range from 0.5 to 20 phr. Preferably, the amount will range from 1 to 10 phr.

### Additive

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators, accelerators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1 to 6 phr being preferred. Typical amounts of antioxidants comprise 0.5 to 5 phr. Representative antioxidants may be, for example, polymerized trimethyl dihydroquinoline, mixture of aryl-p-phenylene diamines, and others, such as, for example, those disclosed in The Vanderbilt Rubber Handbook (1978), pages 344 through 346. Typical amounts of antiozonants comprise 1 to 5 phr. A non-limiting representative antiozonant can be, for example, N-(1,3 dimethyl butyl)-n'-phenyl-p-phenylenediamine. Typical amounts of fatty acids, if used, which can include stearic acid as an example, can comprise 0.5 to 5 phr. Typical amounts of waxes comprise 1 to 5 phr. Often microcrystalline waxes are used, but refined paraffin waxes or combinations of both can be used. Typical amounts of peptizers comprise 0.1 to 1 phr. Typical peptizers may be, for example, pentachlorothiophenol and dibenzamidodiphenyl disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) of the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

Vulcanization of a pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The disclosure contemplates a heavy load tire component formed from such method. The tire component can be ground contacting or non-ground contacting. The tire can be pneumatic or non-pneumatic. In one embodiment, the tire component can be a tread.

The tire of the present disclosure may be a race tire, passenger tire, aircraft tire, agricultural, earthmover, off-the-road, truck (commercial or passenger) tire, and the like. Preferably, the tire is for a heavy load or heavy-duty vehicle, such as a bus, garbage truck, and the like. The tire may also be a radial or bias, with a radial being preferred.

The rubber composition itself may also be useful as a tire sidewall or other tire components or in rubber tracks, conveyor belts or other industrial product applications. Particularly, improved abrasion resistance offers advantages in a wide variety of rubber products, such as windshield wiper blades, brake diaphragms, washers, seals, gaskets, hoses, conveyor belts, power transmission belts, shoe soles, shoe foxing and floor mats for buildings or automotive applications.

The following examples are presented for the purposes of illustrating the present invention. All parts are parts by weight unless specifically identified otherwise.

### EXAMPLE 1

In this example, the effects on the performance of rubber compounds are illustrated for compounds comprising a tri-polymer blend of polymers each containing a high cis content.

Rubber compounds were mixed in a multi-step mixing procedure following the recipes in Table 1. Standard amounts of additive materials and curing techniques were also used. The rubber compounds were then cured and tested for various properties including, *inter alia,* abrasion resistance and cured stiffness.

A control rubber compound (representing a conventional heavy load tire rubber compound) was prepared as Control Sample A using a tri-polymer blend of isoprene (natural rubber), a majority portion of Ni-catalyzed polybutadiene, and a minority portion of Nd-catalyzed polybutadiene.

For the Experimental Sample B, a rubber compound was prepared by replacing the natural rubber with equal parts synthetic polyisoprene; and by instead using a majority portion of Nd-catalyzed polybutadiene and a minority portion of Ni-catalyzed polybutadiene. Experimental Sample B also replaced the Nd-catalyzed polybutadiene with one having lower Mooney viscosity and added a resin.

The basic formulations are illustrated in the following Table 1, which is presented in parts per 100 parts by weight of elastomers (phr).

**TABLE 1**

| | Samples | |
|---|---|---|
| | Control | Experimental |
| | **A** | **B** |
| Natural Rubber | 20 | 0 |
| Synthetic Polyisoprene | 0 | 20 |
| Polybutadiene A¹ | 50 | 20 |
| Polybutadiene B² | 30 | 0 |
| Polybutadiene C³ | 0 | 60 |
| Processing Oil (Soybean) | 4.6 | 3.0 |
| Carbon Black | 48 | 49 |
| Silica | 10 | 15 |
| Silica Coupler | 2.5 | 1.8 |
| Traction Resin⁴ | 0 | 3.5 |
| Tackifying Resin⁵ | 0 | 1 |
| Primary Accelerator⁶ | 0.5 | 1.5 |
| Secondary Accelerator⁷ | 0.8 | 0 |
| Blend of fatty acid derivatives | 0.9 | 0 |
| Additive | 0 | 2 |
| Sulfur | 1.5 | 1.3 |

| | | |
|---|---|---|
| ¹ High cis 1,4-polybutadiene, Ni, branched with Tg -106°C and Mooney Viscosity 40.00 obtained from the Goodyear Tire & Rubber Company ²High cis 1,4-polybutadiene, Nd with Tg -106°C and Mooney Viscosity 55.00 obtained from the Goodyear Tire & Rubber Company ³High cis 1,4-polybutadiene, Nd with Tg -106°C and Mooney Viscosity 40.00 obtained from the Goodyear Tire & Rubber Company ⁴Alspha-methylstyrene resin ⁵Straight chained petroleum hydrocarbon resin ⁶TBBS ⁷CBS | | |

Various cured rubber properties of the Control sample A and the Experimental sample B are reported in the following Table 2 with the results from the Control being normalized to values of 100 and the results for the Experimental sample B being related to the normalized values.

**TABLE 2**

| | Samples | |
|---|---|---|
| | Control | Experimental |
| | **A** | **B** |
| | **%** | **%** |
| **Material incorporation** | | |
| Specific gravity | 100 | 101 |
| **Processability** | | |
| RPA500 G' uncured at 0.83 Hz | 100 | 117 |
| **Dynamic modulus** | | |
| RPA500 G' cured at 10% strain | 100 | 105 |
| RPA500 G' cured at 50% strain | 100 | 107 |
| **Heat generation** | | |
| Zwick Rebound at 100° C | 100 | 100 |
| RPA500 tan d at 10% strain | 100 | 102 |
| **Elongation** | | |
| Ring MTE - Elongation at break | 100 | 99 |
| **Tear Resistance** | | |
| Strebler SS avg. load/width (at 95° C) | 100 | 109 |
| Aged Strebler SS avg. load/width (at 95° C) | 100 | 114 |
| Instron tear avg. force/width (at 95° C) | 100 | 113 |
| **Chip/Flake Indicator** | | |
| FDF factor | 100 | 107 |
| **Crack-growth resistance** | | |
| Aged DeMattia crack growth rate | 100 | 90 |
| **Abrasion resistance** | | |
| Grosch Abrasion rate (high severity) | 100 | 102 |
| Grosch Abrasion rate (ultra-high severity) | 100 | 103 |
| **Wet traction** | | |
| Zwick Rebound at 0° | 100 | 101 |

As can be seen in Table 2, the overall performance properties of the heavy load tire rubber compound B (utilizing an all-synthetic tri-polymer blend) compared favorably with the performance properties of the Control A.

Experimental Sample B displays improved adhesion over the Control A. This is shown by higher Strebler and Instron tear values.

The Experimental Sample B demonstrates improved stiffness over the Control A. This is shown by higher dynamic modulus values across increasing strain percent. Additionally, Sample B demonstrates improved abradability values over Control A when measured across increasing severities using the Grosch abrasion test. Therefore, the results indicate that the disclosed compound improved abrasion resistance over the conventional compound A.

Indeed, Sample B displays at least a 3% improvement in abrasion resistance, and at least a 5% improvement in stiffness. Sample B also displays improved processability despite increased silica level in the absence of a combination of accelerators. It is believed, that for the same reason, Sample B provides an improved scorch-safety compared to the conventional Control A.

It is hereby concluded that the presently disclosed rubber compounds are useful for heavy load tire treads when such compounds comprise the disclosed all synthetic tripolymer blend with resin and reduced cure package.

One aspect of the disclosed composition is that it provides a balance between processability and performance by, advantageously, improving both without a demand for tradeoff.

## Claims

1. A rubber composition comprising, based on 100 parts by weight of elastomer (phr):
at least three diene elastomers each being a different rubber material, the elastomers comprising:
(a) polybutadienes comprising:
(i) a majority portion of a first polybutadiene synthesized with a lanthanide series catalyst, the first polybutadiene having a first Mooney viscosity;
(ii) a minority portion of a second polybutadiene synthesized with a Nickel-based catalyst, the second polybutadiene having a Mooney viscosity within ± 5 MU of the Mooney viscosity of the first polybutadiene;
(b) a synthetic polyisoprene;
wherein each of the at least three elastomers has a cis content of greater than 80 percent or greater than 90 percent; and wherein said Mooney viscosities are Mooney viscosities (ML 1+4) at 100°C as measured in accordance with ASTM D1646.

2. The rubber composition of claim 1, wherein the first polybutadiene is catalyzed with neodymium (Nd) and the second polybutadiene is catalyzed with nickel (Ni).

3. The rubber composition of claim 1 or 2, wherein the at least three diene elastomers exclude natural rubber (NR) and/or additional polymer elastomers.

4. The rubber composition of at least one of the previous claims further comprising
(i) silica and excluding a secondary accelerator or a combination of accelerators;
and/or
(ii) silica and excluding N-cyclohexyl-2-benzothiazolesulphenamide (CBS).

5. The rubber composition of at least one of the previous claims, comprising greater than 2 phr vegetable triglyceride oil or soybean oil.

6. The rubber composition of at least one of the previous claims, excluding petroleum-derived rubber processing oil.

7. The rubber composition of at least one of the previous claims, comprising greater than 4 phr in total of one or a combination of resin.

8. The rubber composition of at least one of the previous claims, wherein the first and the second polybutadiene each have a glass transition temperature (Tg) below -80°C or below - 100°C; and/or wherein a difference in the glass transition temperature (Tg) between the first and second polybutadiene is less than 5°C; wherein said glass transition temperatures are determined as a peak midpoint by a differential scanning calorimeter (DSC) at a temperature rate of increase of 10°C per minute according to ASTM D3418-15.

9. The rubber composition of at least one of the previous claims, wherein the first polybutadiene is present in a majority content level relative to a total content level of all other elastomers in the rubber composition.

10. The rubber composition of at least one of the previous claims, wherein the second polybutadiene and the polyisoprene are present in a 1:1 ratio or are present with a ratio of from 0.9:1 to 1.1:1.

11. The rubber composition of at least one of the previous claims comprising:
(i) from 10 phr to 30 phr of the synthetic polyisoprene and from 70 phr to 90 phr of the combined first and second polybutadienes; and/or
(ii) from 50 to 70 phr of the first polybutadiene and from 10 to 30 phr of the second polybutadiene.

12. A rubber composition comprising, based on 100 parts by weight of elastomer (phr):
10 phr to 30 phr of a synthetic polyisoprene having a cis content of greater than 80 percent or greater than 90 percent;
70 phr to 90 phr of two different polybutadienes each having a cis content of greater than 80 percent or greater than 90 percent, namely a first polybutadiene synthesized with a lanthanide series catalyst and a second polybutadiene not being synthesized with a lanthanide series catalyst, the content of the first polybutadiene in the rubber composition being higher than the content of the second polybutadiene in the rubber composition and the glass transition temperature of the first and second polybutadiene being both below -80°C or below -100°C; and
greater than 3 phr vegetable triglyceride rubber processing oil; wherein said glass transition temperatures are determined as a peak midpoint by a differential scanning calorimeter (DSC) at a temperature rate of increase of 10°C per minute according to ASTM D3418-15.

13. The rubber composition of claim 12 wherein (i) the two polybutadienes have a similar Tg and a similar Mooney viscosity; and/or wherein (ii) the second polybutadiene has Mooney viscosity within ± 5 MU of the first Mooney viscosity and the difference in the glass transition temperature (Tg) between the first and second polybutadiene is less than 5°C; wherein said glass transition temperatures are determined as a peak midpoint by a differential scanning calorimeter (DSC) at a temperature rate of increase of 10°C per minute according to ASTM D3418-15 and wherein said Mooney viscosities are Mooney viscosities (ML 1+4) at 100°C as measured in accordance with ASTM D1646.

14. A tire having a component comprising the rubber composition in accordance with at least one of the previous claims.

15. The tire of claim 14 wherein the component is a tread or a ground contacting component of the tire and/or wherein the tire is a truck tire of a heavy load tire.

## Patentansprüche

1. Kautschukzusammensetzung, die auf Basis von 100 Gewichtsteilen Elastomer (ThK) Folgendes umfasst:
mindestens drei Dienelastomere, die jeweils ein anderes Material auf Kautschukbasis darstellen; wobei die Elastomere Folgendes umfassen:
(a) Polybutadiene, die das Folgende umfassen:
(i) einen größeren Abschnitt eines ersten Polybutadiens, das mit einem Katalysator aus der Serie der Lanthaniden synthetisiert wurde; wobei das erste Polybutadien eine erste Mooney-Viskosität aufweist;
(ii) einen kleineren Abschnitt eines zweiten Polybutadiens, das mit einem Katalysator auf Basis von Nickel synthetisiert wurde; wobei das zweite Polybutadien eine Mooney-Viskosität aufweist, die innerhalb eines Bereichs von ± 5 MU der Mooney-Viskosität des ersten Polybutadiens liegt;
(b) ein synthetisches Polyisopren;
wobei jedes der mindestens einen der drei Elastomere einen cis-Isomergehalt aufweist, der größer als 80 Prozent oder größer als 90 Prozent ist; und wobei die oben genannten Mooney-Viskositäten Mooney-Viskositäten (ML 1+4) bei 100 °C darstellen, wie sie gemäß der Norm ASTM D1646 gemessen werden.

2. Kautschukzusammensetzung nach Anspruch 1, wobei das erste Polybutadien mit Neodym (Nd) katalysiert wird und das zweite Polybutadien mit Nickel (Ni) katalysiert wird.

3. Kautschukzusammensetzung nach Anspruch 1 oder 2, wobei Naturkautschuk (NR) und/oder zusätzliche polymere Elastomere von den mindestens drei Dienelastomeren ausgeschlossen sind.

4. Kautschukzusammensetzung nach mindestens einem der vorhergehenden Ansprüche, welche ferner Folgendes umfasst:
(i) Silica, wobei ein sekundäre Beschleuniger oder eine Kombination von Beschleunigern ausgeschlossen sind;
(ii) Silica, wobei N-Cyclohexyl-2-benzothiazolsulfenamid (CBS) ausgeschlossen ist.

5. Kautschukzusammensetzung nach mindestens einem der vorhergehenden Ansprüche, die eine Menge an Triglyceridöl pflanzlichen Ursprungs oder Sojaöl umfasst, die größer als 2 ThK ist.

6. Kautschukzusammensetzung nach mindestens einem der vorhergehenden Ansprüche, wobei ein Kautschukprozessöl, das von Erdöl abgeleitet ist, ausgeschlossen ist.

7. Kautschukzusammensetzung nach mindestens einem der vorhergehenden Ansprüche, die ein Harz oder eine Harzkombination in einer Menge umfasst, die insgesamt mehr als 4 ThK beträgt.

8. Kautschukzusammensetzung nach zumindest einem der vorhergehenden Ansprüche, wobei das erste und das zweite Polybutadien jeweils eine Glasübergangstemperatur (Tg) aufweisen, die niedriger als -80 °C oder niedriger als -100 °C ist; und/oder wobei ein Unterschied in der Glasübergangstemperatur (Tg) zwischen dem ersten und dem zweiten Polybutadien weniger als 5 °C beträgt; wobei die oben genannten Glasübergangstemperaturen als ein maximaler Medianwert mittels eines Differential-Scanning-Kalorimeters (DSC) mit einer Temperaturanstiegsrate von 10 °C pro Minute gemäß der Norm ASTM D3418-15 bestimmt werden.

9. Kautschukzusammensetzung nach mindestens einem der vorhergehenden Ansprüche, wobei das erste Polybutadien in einem Gehalt vorhanden ist, der bezogen auf den Gesamtgehalt aller anderen Elastomere in der Kautschukzusammensetzung einer Mehrheit entspricht.

10. Kautschukzusammensetzung nach mindestens einem der vorhergehenden Ansprüche, wobei das zweite Polybutadien und das Polyisopren in einem Verhältnis von 1:1 oder in einem Verhältnis von 0,9:1 bis 1,1:1 vorhanden sind.

11. Kautschukzusammensetzung nach mindestens einem der vorhergehenden Ansprüche, die Folgendes umfasst:
(i) von 10 ThK bis 30 ThK des synthetischen Polyisoprens und von 70 ThK bis 90 ThK des ersten und zweiten Polybutadiens in Kombination; und/oder
(ii) von 50 ThK bis 70 ThK des ersten Polybutadiens und von 10 ThK bis 30 ThK des zweiten Polybutadiens.

12. Kautschukzusammensetzung, die auf Basis von 100 Gewichtsteilen Elastomer (ThK) Folgendes umfasst:
von 10 ThK bis 30 ThK eines synthetischen Polyisoprens, das einen cis-Isomergehalt aufweist, der größer als 80 Prozent ist oder größer als 90 Prozent ist;
70 ThK bis 90 ThK von zwei verschiedenen Polybutadienen, die jeweils einen cis-Isomergehalt aufweisen, der größer als 80 Prozent ist oder größer als 90 Prozent ist; genauer gesagt ein erstes Polybutadien, das mit einem Katalysator aus der Serie der Lanthaniden synthetisiert wurde, und ein zweites Polybutadien, das nicht mit einem Katalysator aus der Serie der Lanthaniden synthetisiert wurde; wobei der Gehalt des ersten Polybutadiens in der Kautschukzusammensetzung größer ist als der Gehalt des zweiten Polybutadiens in der Kautschukzusammensetzung; und wobei die oben genannten Glasübergangstemperaturen des ersten und des zweiten Polybutadiens beide unter -85 °C oder unter -100 °C liegen; und
ein Triglyceridöl pflanzlichen Ursprungs zum Kautschukprozess in einer Menge, die größer als 3 ThK ist; wobei die oben genannten Glasübergangstemperaturen als ein maximaler Medianwert mittels eines Differential-Scanning-Kalorimeters (DSC) mit einer Temperaturanstiegsrate von 10 °C pro Minute gemäß der Norm ASTM D3418-15 bestimmt werden.

13. Kautschukzusammensetzung nach Anspruch 12, wobei (i) beide Polybutadiene einen Tg-Wert aufweisen, der ähnlich ist, und eine Mooney-Viskosität, die ähnlich ist; und/oder wobei (ii) das zweite Polybutadien eine erste Mooney-Viskosität aufweist, die innerhalb eines Bereichs von ± 5 MU der Mooney-Viskosität des ersten Polybutadiens liegt, und der Unterschied in der Glasübergangstemperatur (Tg) zwischen dem ersten und dem zweiten Polybutadien weniger als 5 °C beträgt; wobei die oben genannten Glasübergangstemperaturen als ein maximaler Medianwert mittels eines Differential-Scanning-Kalorimeters (DSC) mit einer Temperaturerhöhungsrate von 10 °C pro Minute gemäß der Norm ASTM D3418-15 bestimmt werden; und wobei die Mooney-Viskositäten Mooney-Viskositäten (ML 1+4) bei 100 °C darstellen, wie sie gemäß der Norm ASTM D1646 gemessen werden.

14. Reifen, der eine Komponente aufweist, die die Kautschukzusammensetzung in Übereinstimmung mit mindestens einem der vorhergehenden Ansprüche umfasst.

15. Reifen nach Anspruch 14, wobei die Komponente eine Lauffläche oder eine Komponente des Reifens ist, die mit der Straße in Kontakt kommt, und/oder wobei der Reifen ein für einen LKW bestimmter Reifen oder ein für harte Arbeit bestimmter Reifen ist.

## Revendications

1. Composition de caoutchouc qui comprend, en se basant sur 100 parties en poids d'élastomère (phr) :
au moins trois élastomères diéniques qui représentent chacun une matière à base de caoutchouc différente ; dans laquelle les élastomères comprennent :
(a) des polybutadiènes qui comprennent :
(i) une portion majeure d'un premier polybutadiène qui a été synthétisé avec un catalyseur de la série des lanthanides ; dans laquelle le premier polybutadiène possède une première viscosité de Mooney ;
(ii) une portion mineure d'un deuxième polybutadiène qui a été synthétisé avec un catalyseur à base de nickel; dans laquelle le deuxième polybutadiène possède une viscosité de Mooney qui se situe au sein d'une plage égale à ± 5 MU de la viscosité de Mooney du premier polybutadiène ;
(b) un polyisoprène synthétique ;
dans laquelle chacun desdits au moins trois élastomères possède une teneur en isomère cis qui est supérieure à 80 pour cent ou supérieure à 90 pour cent ; et dans laquelle lesdites viscosités de Mooney représentent des viscosités de Mooney (ML 1+4) à 100 °C, telles qu'on les mesure en conformité avec la norme ASTM D1646.

2. Composition de caoutchouc selon la revendication 1, dans laquelle le premier polybutadiène est catalysé avec du néodyme (Nd) et le deuxième polybutadiène est catalysé avec du nickel (Ni).

3. Composition de caoutchouc selon la revendication 1 ou 2, dans laquelle le caoutchouc naturel (NR) et/ou des élastomères polymères supplémentaires sont exclus desdits au moins trois élastomères diéniques.

4. Composition de caoutchouc selon au moins une des revendications précédentes, qui comprend en outre :
(i) de la silice tout en excluant un accélérateur secondaire ou une combinaison d'accélérateurs ;
(ii) de la silice tout en excluant du N-cyclohexyl-2-benzothiazolesulfénamide (CBS).

5. Composition de caoutchouc selon au moins une des revendications précédentes, qui comprend une quantité d'huile de triglycérides d'origine végétale ou d'huile de soja, qui est supérieure à 2 phr.

6. Composition de caoutchouc selon au moins une des revendications précédentes, dans laquelle on exclut une huile de traitement du caoutchouc qui dérive du pétrole.

7. Composition de caoutchouc selon au moins une des revendications précédentes, qui comprend une résine ou une combinaison de résines en une quantité qui est supérieure à 4 phr au total.

8. Composition de caoutchouc selon au moins une des revendications précédentes, dans laquelle le premier et le deuxième polybutadiène possèdent chacun une température de transition vitreuse (Tg) qui est inférieure à -80 °C ou inférieure à -100 °C ; et/ou dans laquelle une différence dans la température de transition vitreuse (Tg) entre le premier et le deuxième polybutadiène est inférieure à 5 °C; dans lequel lesdites températures de transition vitreuse sont déterminées sous la forme d'une valeur médiane maximale par l'intermédiaire d'un calorimètre différentiel à balayage (DSC) un taux d'élévation de la température égal à 10 °C par minute en conformité avec la norme ASTM D3418-15.

9. Composition de caoutchouc selon au moins une des revendications précédentes, dans laquelle le premier polybutadiène est présent en une teneur qui correspond à une majorité par rapport à la teneur totale de l'ensemble des autres élastomères dans la composition de caoutchouc.

10. Composition de caoutchouc selon au moins une des revendications précédentes, dans laquelle le deuxième polybutadiène et le polyisoprène sont présents dans un rapport qui est égal à 1:1 ou sont présents à concurrence d'un rapport qui va de 0,9:1 à 1,1:1.

11. Composition de caoutchouc selon au moins une des revendications précédentes, qui comprend :
(i) de 10 phr à 30 phr du polyisoprène synthétique et de 70 phr à 90 phr du premier et du deuxième polybutadiène combinés ; et/ou
(ii) de 50 à 70 phr du premier polybutadiène et de 10 à 30 phr du deuxième polybutadiène.

12. Composition de caoutchouc qui comprend, en se basant sur 100 parties en poids d'élastomère (phr) :
de 10 phr à 30 phr d'un polyisoprène synthétique qui possède une teneur en isomère cis qui est supérieure à 80 pour cent ou qui est supérieure à 90 pour cent ;
de 70 phr à 90 phr de deux polybutadiènes différents qui possèdent chacun une teneur en isomère cis qui est supérieure à 80 pour cent ou qui est supérieure à 90 pour cent ; plus précisément un premier polybutadiène qui a été synthétisé avec un catalyseur de la série des lanthanides et un deuxième polybutadiène qui n'a pas été synthétisé avec un catalyseur de la série des lanthanides ; dans laquelle la teneur du premier polybutadiène dans la composition de caoutchouc est supérieure à la teneur du deuxième polybutadiène dans la composition de caoutchouc ; et dans laquelle les températures de transition vitreuse du premier et du deuxième polybutadiène sont toutes deux inférieures à -85 °C ou inférieures à - 100 °C ; et
une huile de triglycérides d'origine végétale pour le traitement du caoutchouc en une quantité qui est supérieure à 3 phr ; dans laquelle lesdites températures de transition vitreuse sont déterminées sous la forme d'une valeur médiane maximale par l'intermédiaire d'un calorimètre différentiel à balayage (DSC) un taux d'élévation de la température égal à 10 °C par minute en conformité avec la norme ASTM D3418-15.

13. Composition de caoutchouc selon la revendication 12, dans laquelle (i) les deux polybutadiène possèdent une valeur Tg qui est similaire ainsi qu'une viscosité de Mooney qui est similaire ; et/ou dans laquelle (ii) le deuxième polybutadiène possède une première viscosité de Mooney qui se situe au sein d'une plage égale à ± 5 MU de la viscosité de Mooney du premier polybutadiène et la différence dans la température de transition vitreuse (Tg) entre le premier et le deuxième polybutadiène est inférieure à 5 °C ; dans lequel lesdites températures de transition vitreuse sont déterminées sous la forme d'une valeur médiane maximale par l'intermédiaire d'un calorimètre différentiel à balayage (DSC) un taux d'élévation de la température égal à 10 °C par minute en conformité avec la norme ASTM D3418-15 ; et dans laquelle lesdites viscosités de Mooney représentent des viscosités de Mooney (ML 1+4) à 100 °C, telles qu'on les mesure en conformité avec la norme ASTM D1646.

14. Bandage qui possède un composant qui comprend la composition de caoutchouc en conformité avec au moins une des revendications précédentes.

15. Bandage selon la revendication 14, dans lequel le composant est une bande de roulement ou un composant du bandage qui entre en contact avec la route et/ou dans lequel le bandage est un bandage destiné à un camion ou un bandage destiné à des travaux durs.
